# EUROPEAN PATENT SPECIFICATION

(11) **EP 2 628 511 B1**
(45) Date of publication and mention of the grant of the patent: **29.03.2017**
(21) Application number: 13155345.5
(22) Date of filing: 15.02.2013
(51) Int. Cl.: A63B 71/08

(54) **MOUTH GUARD**
MUNDSCHUTZ
PROTÈGE-DENTS

(30) Priority: 17.02.2012 ES 201230249
(43) Date of publication of application: 21.08.2013
(73) Proprietor: Paredes Sanchez, Esperanza del Carmen, 08304 Mataró, Barcelona (ES); Moreno Paredes, Raquel, 08349 Cabrera de Mar, Barcelona (ES); Domínguez Adame, Antonio, 08303 Mataró, Barcelona (ES)
(72) Inventor: Paredes Sanchez, Esperanza del Carmen, 08304 Mataró, Barcelona (ES); Moreno Paredes, Raquel, 08349 Cabrera de Mar, Barcelona (ES); Domínguez Adame, Antonio, 08303 Mataró, Barcelona (ES)
(74) Representative: Durán-Corretjer, S.L.P.

(56) References cited:
- WO-A1-2009/026659
- FR-A1- 2 820 308
- US-A- 2 966 908
- US-A- 3 126 002
- US-A1- 2011 091 833

## Description

### Object of the invention.

The present invention, as its title indicates, refers to a mouth guard, of the type comprising an outer plate intended to be positioned on the face for covering the user's lips, and prolonged by its rear middle area in a horizontally flattened intermediate extension, of arched plan, destined to be positioned between the upper and lower jaw teeth to form a bite region; said extension extending at its intermediate rear area in a thickening intended to be positioned inside the user's mouth, behind the teeth.

### Application field of the invention.

This mouth guard is applicable to the odontological sector and specifically in the protection of teeth in both children and adults.

### Background of the invention.

Currently there are different groups of people who tend to clench or grind the tooth structures (bruxism) either involuntarily or due to muscle tension during the performance of physical exertion, such as sportspeople.

In these cases it is advisable to use a mouth guard that prevents an unnecessary deterioration of the teeth and potential temporomandibular joint impairment; however, in both cases it is necessary for the mouth guard to have suitable features to fit the user's mouth and can be used conveniently, which is not achieved with the mouth guards on the market, especially due to the bulky volume taken by the mouth guard inside the mouth and that it does not have a bite area large enough to be arranged between the incisors, premolars and molars of the upper and lower jaws. It is also required that the mouth guard achieves protective action during an involuntary clenching and provides a distribution of the contact pressure, by reducing the relieving force of the jaws on the teeth.

The patent ES 2345703 B1 owned by the applicant of the present invention is known, which relates to a geriatric mouth guard especially intended for use by elderly and aged people who may have some anxiety reflected in a stuttering and a mouth movement resulting in involuntary bite. This causes them to suffer from excess salivation or drooling and that the teeth can cause injury to the inside of the lips.

This geriatric mouth guard comprises a thickening of the inner side, prolonged from the front by a bite area of arched configuration and slightly flat, this bite area being joined to an outer extension plate that completely covers the lips outwardly, said rear thickening has a concavity to support the tongue, and a rounded top for its arrangement in the hard palate of the user.

This geriatric mouth guard has specific features for application in elderly people, both in regard to the bite area which is limited in width, sufficient to be disposed between the upper and lower jaw teeth, preventing the complete closure of the jaw, and the bulging configuration of the rear thickening that causes the displacement of the tongue towards the rear zone, thus preventing it from being bitten, and facilitates a suction action by the user, avoiding the uncontrolled discharge of saliva or drooling.

Also known is the teething pacifier disclosed in ES1036051 U which is formed by a large ring incorporating, on one side, an anatomical teat made in rubber, latex, silicone or the like generally half-moon shaped and attached to said ring at the central point of its convex curved profile, whereas on the other side it has a gripping and suspending ring. This teething pacifier has an anatomical shape of the teat for avoiding possible deformation of the baby's palate.

Both the above-mentioned geriatric mouth guard and the teething pacifier are especially suited to cover a double biting, in an area limited to the teeth, and sucking functionality, being necessary for the rear portion or the teat to have a bulky configuration to be pressed with the tongue against the palate to perform the suction and that the intermediate portion to have a limited width to alternate breathing with sucking, especially when the person has a stuffy nose for any reason (cold, polyps, etc..).

These backgrounds do not show adequate features to solve the problems posed by the uncontrolled clenching due to various reasons of teeth, premolars and molars in children, youth and adults.

US 2 966 908 A and US 2011/091833 A1 describe, respectively, a universal mouth protector and an orthodontic appliance.

### Description of the invention.

The mouth guard object of this invention has specific features to ensure high comfort of use by children, youth and adults, regardless of whether they clench or grind their dental structures because they suffer from bruxism or they are sportspeople, or for any other reason, for example in the case of people suffering from epilepsy.

The mouth guard of the invention is of the type referred to above, i.e., of the type comprising an outer plate intended to be positioned on the face for covering the user's lips, and prolonged by its rear middle area in a horizontally flattened intermediate extension of arched plan, intended to be positioned between the incisors, premolars and molars of the upper and lower jaws, said intermediate extension extending by its rear area in a thickening intended to be positioned inside the user's mouth behind the teeth.

This mouth guard, with the characteristics of claim 1 provides both a protective and anti-stress bite splint which allows for the reduction of the relieving force of the jaws on the teeth (teeth, premolars and molars), thus preventing the erosion and destruction of the enamel and dentin, possible dysfunctions of the temporomandibular joint and subsequent pains that it entails.

To achieve a maximum bite surface and the protection of all of the teeth, the intermediate extension laterally extend beyond the ends of the inner thickening, defining an arched surface intended to be arranged between the user's teeth, premolars and molars.

Another object of the invention according to the characteristics specified in claim 1 is to reduce the volume taken by the mouth guard inside the mouth, as the guard of the invention does not provide a suction function due to the use to which it is intended, by ensuring, however, a proper holding thereof in the use position, which is especially important for sportspeople.

Another object of the invention, according to the characteristics included in claim 2, is to provide the mouth guard with a through hole through which the user can breathe comfortably during the use of the mouth guard, without having to open the mouth. This hole allows the air to be drawn in and expelled, thus preventing the mandibular fatigue that other teething or mouth guard devices usually produce when the user tries to forcibly open his/her mouth when undergoing hyperventilation, as could be the case of sportspeople due to an overexertion during the practice of exercise.

This feature allows for an improved use of the mouth guard both by sportspeople and people suffering from bruxism with respiratory impairment due to nasal blockage or colds, allergies, nasal polyps, etc.

The features mentioned above and others specified in the dependent claims of the invention provide a number of additional advantages which will be better understood in the light of some exemplary embodiments of the mouth guard.

### Description of figures.

In order to complement the description that is being carried out and with the purpose of facilitating the understanding of the characteristics of the invention, the present description is accompanied by a set of drawings wherein, by way of a non-limiting example, the following has been represented:
- Figure 1 shows a front perspective view of a first embodiment of the mouth guard according to the invention.
- Figure 2 shows an elevation view of the mouth guard of Figure 1.
- Figure 3 shows a rear perspective view of the mouth guard of the previous figures sectioned along a vertical plane.
- Figures 4, 5 and 6 show views similar to the previous one of an embodiment variant of the mouth guard in this case provided with a through hole for the user to breathe therethrough.

### Preferred embodiment of the invention.

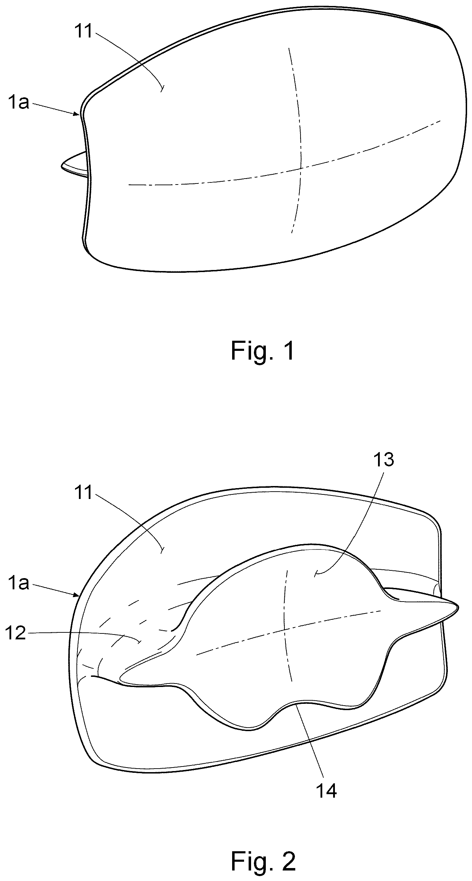

In the embodiment shown in Figures 1 to 3 the mouth guard referenced in its entirety as (1a) comprises an outer plate (11) intended to be positioned on the face for covering the user's lips and prolonged at its rear middle region by a horizontally flattened intermediate extension (12) of arched plan and intended to be positioned between the upper and lower jaw teeth, thus forming a bite area for the user.

Said intermediate extension (12) extends at its rear zone with an inner thickening (13) intended to be positioned inside the user's mouth behind the teeth.

According to the invention, this internal thickening (13) has a curved plate-like configuration of uniform thickness, with a concavity facing the rear or inner side of the mouth, said plate being vertically oriented centred relative to the intermediate extension (12) and having a length shorter than said intermediate extension (12).

The configuration of this inner thickening (13) like a curved plate determines that the mouth guard takes a minimum space inside the mouth and ensures the correct holding of the mouth guard in the usage position, avoiding its unintended projection or falling from the mouth.

This internal thickening (13) has an outline of generally oval configuration with a rounded recess (14) provided at its lower end and centrally arranged in the area coinciding with the frenulum of the tongue.

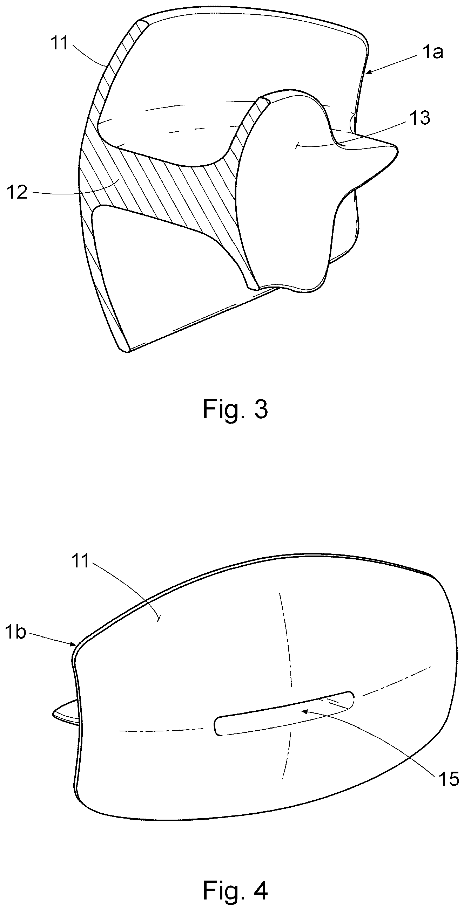

As can be seen in Figures 2 and 3 the curved plate-like inner thickening (13) has a length or width smaller than that of the intermediate extension (12), with said inner thickening just serving to cover the teeth and yet allowing the extension of the bite area defined by the intermediate extension (12) to the proximity of the molars.

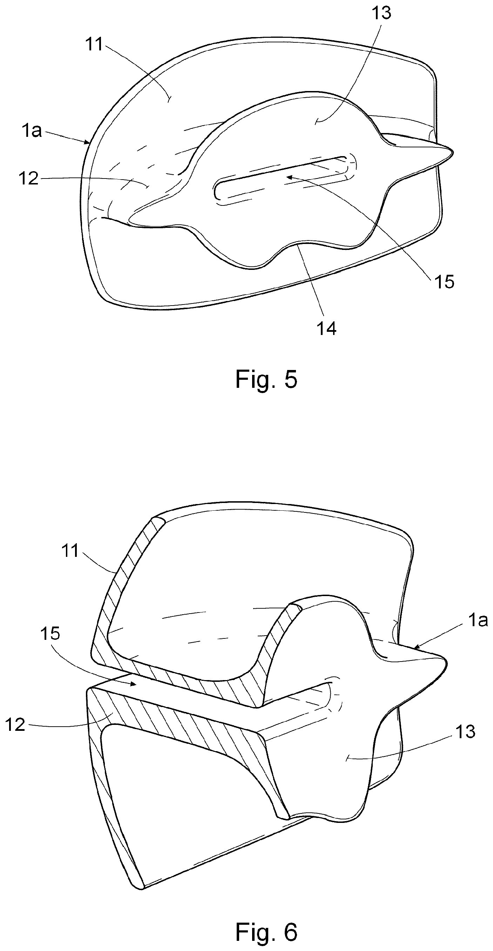

Figures 4, 5 and 6 show a variant embodiment of the mouth guard, referenced in this case by (1b), which presents characteristics similar to those of the mouth guard (1a) of Figures 1,2 and 3, and further comprising a through-hole (15) which passes horizontally through the outer plate (11), the intermediate extension (12) and the internal thickening (13), with said through-hole (15) being opened at both opposite inner and outer ends of the mouth guard.

This through-hole (15) forms a duct for air circulation and allows the user to breathe through the same during use of the mouth guard (1b).

This through-hole (15) has a rectangular section, elongated in the horizontal direction and centred inside the intermediate extension (12), thus providing a section large enough to allow passage of the air flow required for breathing therethrough. This rectangular section of the through-hole (15) also allows for the intermediate extension (12) to have a relatively reduced thickness, preferably less than 10 millimetres, to ensure comfort of use by the user.

With this same purpose it is provided that the inner thickening (13) presents, both in the mouth guard (1a) and (1b), a thickness lower than 5 mm and preferably in the order of about 2 millimetres.

Once the nature of the invention as well as an example of preferred embodiment have been sufficiently described, it is stated for all pertinent purposes that the materials, form, size and arrangement of the elements described are susceptible to changes, provided these do not involve an alteration of the essential characteristics of the invention that are claimed subsequently.

## Claims

1. Mouth guard, of the type comprising an outer plate (11) intended to be positioned on the face for covering the user's lips, and prolonged by its rear middle area in a horizontally flattened intermediate extension (12) of arched plan, intended to be positioned between the upper and lower jaw teeth; said intermediate extension (12) extending at its rear zone to an inner thickening (13) destined to be positioned inside the user's mouth, behind the teeth; **characterized in that** the inner thickening (13) of the mouth guard (1a, 1b) has a curved plate-like configuration of uniform thickness, with a concavity facing the rear or inner side of the mouth, vertically oriented and centred relative to the intermediate extension and with a length shorter than said intermediate extension (12), said internal thickening (13) having an outline of generally oval configuration and having a rounded recess (14) at its lower end, which is centrally arranged in the area coinciding with the frenulum of the tongue, and **in that** said intermediate extension (12) laterally extends beyond the ends of the oval outline of the inner thickening (13) defining an arched surface intended to be arranged between the user's teeth, premolars and molars.

2. Mouth guard according to claim 1, **characterized in that** the mouth guard (1b) comprises a through-hole (15), horizontally passing through the outer plate (11), the intermediate extension (12) and the inner thickening (13), and which is opened at the opposite ends of the mouth guard, said through-hole forming a duct for air circulation and the user's breathing through the same during use of the mouth guard (1b).

3. Mouth guard according to claim 2, **characterized in that** the through-hole (15) has a rectangular section, elongated in the horizontal direction and centred inside the intermediate extension (12).

4. Mouth guard according to any of the preceding claims, **characterized in that** the intermediate extension (12) has a thickness lower than 10 mm.

5. Mouth guard according to any of the preceding claims, **characterized in that** the inner thickening (13) has a thickness lower than 5 millimetres.

## Patentansprüche

1. Mundschutz des Typs, umfassend eine äußere Platte (11), die dazu gedacht ist, auf dem Gesicht positioniert zu werden, um die Lippen des Benutzers abzudecken, und die über ihren rückseitigen, mittleren Bereich zu einer horizontal abgeflachten Zwischenextension (12) mit gewölbter Ebene verlängert ist, die dazu gedacht ist, zwischen den Ober- und Unterkieferzähnen positioniert zu werden; wobei sich die Zwischenextension (12) an ihrer rückseitigen Zone zu einer inneren Verdickung (13) erstreckt, die dazu bestimmt ist, im Inneren des Mundes von dem Benutzer hinter den Zähnen positioniert zu werden;
**dadurch gekennzeichnet, dass**
die innere Verdickung (13) des Mundschutzes (1a, 1b) eine gekrümmte, plattenartige Konfiguration mit einheitlicher Dicke mit einer Konkavität aufweist, die der Rückenseite oder der Innenseite des Mund zugewandt ist, wobei die gekrümmte, plattenartige Konfiguration vertikal ausgerichtet und in Bezug auf die Zwischenextension zentriert angeordnet ist und sie eine Länge aufweist, die kürzer als die Zwischenextension (12) ist, wobei die innere Verdickung (13) einen Umriss mit allgemein ovaler Konfiguration und an ihrem unteren Ende einen gerundeten Ausschnitt (14) aufweist, der in dem Bereich zentral angeordnet ist, der mit dem Zungenfrenulum übereinstimmt, und dass
sich die Zwischenextension (12) lateral über die Enden des ovalen Umrisses von der inneren Verdickung (13) hinaus erstreckt und eine gewölbte Oberfläche definiert, die dazu gedacht ist, zwischen den Zähnen, Prämolaren und Molaren des Benutzers angeordnet zu werden.

2. Mundschutz nach Anspruch 1, **dadurch gekennzeichnet, dass** der Mundschutz (1b) ein Durchgangsloch (15) umfasst, das sich horizontal durch die äußere Platte (11), die Zwischenextension (12) und die innere Verdickung (13) erstreckt und das zu den gegenüberliegenden Enden des Mundschutzes geöffnet ist, wobei das Durchgangsloch einen Kanal zur Luftzirkulation und zum Atmen für den Benutzer durch das Durchgangloch, während dieser den Mundschutz (1b) verwendet, ausbildet.

3. Mundschutz nach Anspruch 2, **dadurch gekennzeichnet, dass** das Durchgangsloch (15) einen rechteckigen Abschnitt aufweist, der in die horizontale Richtung verlängert ist und in der Zwischenextension (12) innen zentral angeordnet ist.

4. Mundschutz nach einem der vorhergehenden Ansprüche, **dadurch gekennzeichnet, dass** die Zwischenextension (12) eine Dicke von weniger als 10 mm hat.

5. Mundschutz nach einem der vorhergehenden Ansprüche, **dadurch gekennzeichnet, dass** die innere Verdickung (13) eine Dicke von weniger als 5 Millimetern hat.

## Revendications

1. Protège-dents, du type comprenant une plaque extérieure (11) destinée à être positionnée sur la face pour couvrir les lèvres de l'utilisateur, et prolongée selon sa zone médiane postérieure par une extension intermédiaire (12) aplatie horizontalement en plan arqué, destinée à être positionnée entre les dents des mâchoires supérieure et inférieure ; ladite extension intermédiaire (12) s'étendant selon sa zone postérieure jusqu'à un épaississement intérieur (13) destiné à être positionné à l'intérieur de la bouche de l'utilisateur, derrière les dents ; **caractérisé en ce que** l'épaississement intérieur (13) du protège-dents (1a, 1b) présente une configuration en forme de plaque incurvée d'épaisseur uniforme, avec une concavité faisant face au côté postérieur ou intérieur de la bouche, orientée verticalement et centrée par rapport à l'extension intermédiaire et avec une longueur plus courte que ladite extension intermédiaire (12), ledit épaississement intérieur (13) ayant un contour à configuration généralement ovale et ayant un creux arrondi (14) à son extrémité inférieure, qui est disposé de façon centrale dans la zone coïncidant avec le frein de la langue, et **en ce que** ladite extension intermédiaire (12) s'étend latéralement au-delà des extrémités du contour ovale de l'épaississement intérieur (13) définissant une surface en arc destinée à être disposée entre les dents de l'utilisateur, les prémolaires et les molaires.

2. Protège-dents selon la revendication 1, **caractérisé en ce que** le protège-dents (1b) comprend un trou traversant (15), passant horizontalement à travers la plaque extérieure (11), l'extension intermédiaire (12) et l'épaississement intérieur (13), et qui est ouvert aux extrémités opposées du protège-dents, ledit trou traversant formant un conduit pour la circulation d'air et la respiration de l'utilisateur à travers celui-ci pendant l'utilisation du protège-dents (1b).

3. Protège-dents selon la revendication 2, **caractérisé en ce que** le trou traversant (15) a une section rectangulaire, allongée dans la direction horizontale et centrée à l'intérieur de l'extension intermédiaire (12).

4. Protège-dents selon l'une quelconque des revendications précédentes, **caractérisé en ce que** l'extension intermédiaire (12) a une épaisseur plus petite que 10 mm.

5. Protège-dents selon l'une quelconque des revendications précédentes, **caractérisé en ce que** l'épaississement intérieur (13) a une épaisseur plus petite que 5 mm.
